# EUROPEAN PATENT APPLICATION

(11) **EP 4 796 361 A1**
(43) Date of publication of application: **26.08.2026**
(21) Application number: 24878612.1
(22) Date of filing: 30.07.2024
(51) Int. Cl.: B60K 17/16

(54) **AXLE AND ALL-TERRAIN VEHICLE**

(30) Priority: 19.10.2023 CN 202322815943 U
(71) Applicant: Segway Technology Co., Ltd., Jiangsu 213000 (CN)
(72) Inventor: ZOU, Changwu, Changzhou, Jiangsu 213000 (CN)
(74) Representative: Manna, Sara
(86) International application number: PCT/CN2024/108616
(87) International publication number: WO 2025/081960

(57) **Abstract**

The present disclosure relates to an axle and an all-terrain vehicle. The axle comprises: an axle housing, a differential assembly, a transmission assembly, an engagement sleeve and a vehicle speed sensor. The differential assembly is arranged in the axle housing; the transmission assembly comprises an output sleeve arranged in the axle housing and matching the differential assembly; the engagement sleeve is sleeved on the output sleeve in a non-rotatable manner, the engagement sleeve can move relative to the output sleeve in its axial direction so as to be engaged with and disengaged from the differential assembly, and a signal tooth is arranged on the outer periphery of the engagement sleeve; and the vehicle speed sensor extends through the axle housing and is opposite the signal tooth.

## Description

### CROSS-REFERENCE TO RELATED APPLICATION

This application is based on and claims priority to Chinese Patent Application No. 202322815943.7, filed on October 19, 2023, the entire content of which is incorporated into the present invention by reference.

### FIELD

The present invention relates to the field of vehicles, and more particularly to an axle and an all-terrain vehicle.

### BACKGROUND

Currently, an anti-lock braking system (ABS) is widely used in a vehicle. An electronic control unit of the ABS collects a vehicle speed signal through an ABS signal output structure. The ABS signal output structure is generally arranged on a wheel hub or an end of a half shaft adjacent to an axle. However, the above-mentioned ABS signal output structure is generally an exposed structure. Mud, sand, and small stones may easily envelop a signal tooth (or a signal collector) or exacerbate wear on the signal tooth. Therefore, over time, an ABS signal source becomes increasingly unstable, which leads to a reduced reliability of the ABS. In related arts, manufacturers integrate the ABS signal output structure into the axle. However, a signal rotor is driven by an independent rotating shaft, which leads to a structurally redundant and larger axle, and increases production costs of the axle.

### SUMMARY

The present invention is intended to solve at least one of the problems existing in the related arts to at least some extent.

Accordingly, embodiments of the present invention propose an axle that may improve the output and reception stability of anti-lock braking system (ABS) signals, reduce the probability of damage to an ABS signal output structure, has a compact structural design, and is beneficial for reducing production costs.

Embodiments of the present invention further propose an all-terrain vehicle.

An axle according to embodiments of the present invention includes: an axle housing; a differential assembly arranged within the axle housing; a transmission assembly including an output sleeve, in which the output sleeve is arranged within the axle housing and cooperates with the differential assembly; a coupling sleeve non-rotatably sleeved on the output sleeve, in which the coupling sleeve is axially movable relative to the output sleeve to engage with and disengage from the differential assembly, and an outer periphery of the coupling sleeve is provided with a signal tooth; and a vehicle speed sensor passing through the axle housing and facing the signal tooth.

In the axle according to the embodiments of the present invention, since the outer periphery of the coupling sleeve is provided with the signal tooth, and the vehicle speed sensor passes through the axle housing and faces the signal tooth, the signal tooth and the coupling sleeve may be integrated into one part, thereby reducing the number of parts inside the axle, making the structure of the axle more compact, and helping reduce production costs of the axle. Moreover, since the signal tooth is arranged within the axle housing, interference from the external environment on the ABS signal output structure may be reduced, the output and reception stability of ABS signals may be improved, and wear or even failure caused by exposure of the ABS signal output structure may be avoided.

In some embodiments, the differential assembly includes a differential case and a side bevel gear passing through the differential case, and the coupling sleeve has a first position, a second position, and a third position. In the first position, the coupling sleeve is non-rotatably fitted only with the output sleeve; in the second position, the coupling sleeve is non-rotatably fitted with the output sleeve and the side bevel gear; and in the third position, the coupling sleeve is non-rotatably fitted with the output sleeve, the side bevel gear, and the differential case.

In some embodiments, an outer periphery of the output sleeve is provided with a first external spline, an outer periphery of the side bevel gear is provided with a second external spline, an inner wall of the coupling sleeve is provided with a first internal spline, and the first internal spline is configured to be non-rotatably fitted with the first external spline and the second external spline.

In some embodiments, an outer periphery of the coupling sleeve is provided with a third external spline, the third external spline is configured as the signal tooth, an inner wall of the differential case is provided with a second internal spline, and the third external spline is configured to be non-rotatably fitted with the second internal spline.

In some embodiments, the transmission assembly further includes a drive shaft, the drive shaft passes through the output sleeve and the side bevel gear, the drive shaft is non-rotatably fitted with the output sleeve, and the drive shaft is rotatably fitted with the side bevel gear; and/or, the axle further includes a driving member and a shift fork, the shift fork is connected to the coupling sleeve, the driving member is connected to the shift fork, and the driving member is configured to drive the shift fork to move along an axial direction of the output sleeve, so as to drive the coupling sleeve to move among the first position, the second position, and the third position.

In some embodiments, the axle housing has a mounting hole, the vehicle speed sensor includes a sensor body and a speed measuring head connected to the sensor body, the speed measuring head passes through the mounting hole and face the signal tooth, and the sensor body is arranged outside the axle housing and connected to the axle housing via a fastener.

In some embodiments, the axle further includes a first sealing member arranged between the mounting hole and the speed measuring head.

In some embodiments, the axle further includes a second sealing member and a drive shaft, the drive shaft passes through the output sleeve, the second sealing member is arranged between the axle housing and the drive shaft, and the second sealing member is arranged at a side of the output sleeve facing away from the differential assembly.

An all-terrain vehicle according to another embodiment of the present invention includes the axle according to any one of the embodiments of the present invention.

In the all-terrain vehicle according to the embodiment of the present invention, since the outer periphery of the coupling sleeve is provided with the signal tooth, and the vehicle speed sensor passes through the axle housing and faces the signal tooth, the signal tooth and the coupling sleeve may be integrated into one part, thereby reducing the number of parts inside the axle, making the structure of the axle more compact, and helping reduce production costs of the axle. Moreover, since the signal tooth is arranged in the axle housing, interference from the external environment on the ABS signal output structure may be reduced, the output and reception stability of ABS signals may be improved, and wear or even failure caused by exposure of the ABS signal output structure may be avoided.

### BRIEF DESCRIPTION OF THE DRAWINGS

FIG. 1 is a partial cross-sectional view of an axle according to an embodiment of the present invention.
FIG. 2 is an enlarged view of part A in FIG. 1.
FIG. 3 is a cross-sectional view showing the installation of a drive shaft, an output sleeve, a coupling sleeve, and a side bevel gear of an axle according to an embodiment of the present invention.
FIG. 4 is a partial cross-sectional view of an axle according to an embodiment of the present invention, with a coupling sleeve in a first position.
FIG. 5 is a partial cross-sectional view of an axle according to an embodiment of the present invention, with a coupling sleeve in a second position.
FIG. 6 is a partial cross-sectional view of an axle according to an embodiment of the present invention, with a coupling sleeve in a third position.

References signs:
1 axle housing; 11 mounting hole; 12 fastener;
2 differential assembly; 21 differential case; 211 second internal spline; 22 side bevel gear; 221 second external spline;
3 transmission assembly; 31 output sleeve; 311 first external spline; 312 limiting flange; 32 drive shaft;
4 coupling sleeve; 41 signal tooth; 42 first internal spline; 43 third external spline; 44 groove;
5 vehicle speed sensor; 51 sensor body; 52 speed measuring head;
61 driving member; 62 shift fork;
71 first sealing member; 72 second sealing member;
81 ball cage; 82 constant velocity shaft.

### DETAILED DESCRIPTION

Embodiments of the present invention are described in detail below, examples of which are shown in the accompanying drawings. The following embodiments described with reference to the accompanying drawing are illustrative. It should be understood that the embodiments described are intended to explain the present invention, but not to limit the present invention.

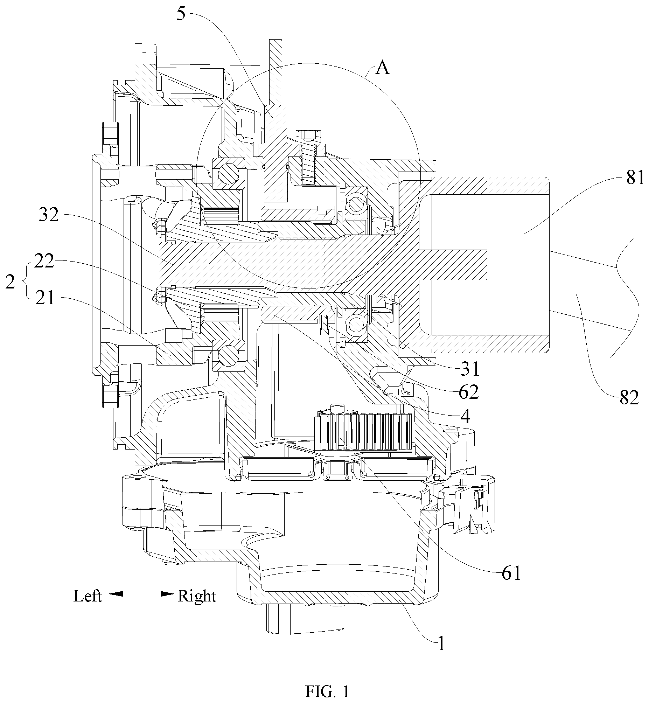

An axle and an all-terrain vehicle according to embodiments of the present invention are described below with reference to FIGS. 1 to 6.

As shown in FIGS. 1 to 6, an axle according to embodiments of the present invention includes an axle housing 1, a differential assembly 2, a transmission assembly 3, a coupling sleeve 4, and a vehicle speed sensor 5.

The differential assembly 2 is arranged within the axle housing 1. The transmission assembly 3 includes an output sleeve 31. The output sleeve 31 is arranged within the axle housing 1 and cooperates with the differential assembly 2. The coupling sleeve 4 is non-rotatably sleeved on the output sleeve 31. The coupling sleeve 4 is axially movable relative to the output sleeve 31, so as to engage with and disengage from the differential assembly 2. An outer periphery of the coupling sleeve 4 is provided with a signal tooth 41. The vehicle speed sensor 5 passes through the axle housing 1 and faces the signal tooth 41.

It may be understood that the axial movement of the coupling sleeve 4 does not affect signal acquisition of the signal tooth 41 by the vehicle speed sensor 5. In other words, regardless of a position to which the coupling sleeve 4 moves, the vehicle speed sensor 5 always faces the signal tooth 41 on the coupling sleeve 4.

In the axle according to the embodiments of the present invention, the coupling sleeve 4 is axially movable relative to the output sleeve 31 to engage with and disengage from the differential assembly 2, so that switching between a two-wheel drive operating mode and a four-wheel drive operating mode of the vehicle may be achieved. Additionally, since the outer periphery of the coupling sleeve 4 is provided with the signal tooth 41, and the vehicle speed sensor 5 passes through the axle housing 1 and faces the signal tooth 41, the signal tooth 41 and the coupling sleeve 4 may be integrated into one part, thereby reducing the number of parts inside the axle, making the structure of the axle more compact, and facilitating a reduction in production costs of the axle. Moreover, since the signal tooth 41 is arranged within the axle housing 1, interference from the external environment on the anti-lock braking system (ABS) signal output structure (i.e., the signal tooth 41 and the vehicle speed sensor 5) may be reduced, and wear or even failure caused by exposure of the ABS signal output structure may be avoided.

It may be understood that the signal tooth 41 may be sleeved on the coupling sleeve 4 in a form of a gear ring, or may be integrally formed on the coupling sleeve 4. In embodiments of the present invention, the signal tooth 41 is integrally formed with the coupling sleeve 4, which facilitates manufacturing of the axle, and offers convenient assembly and low costs.

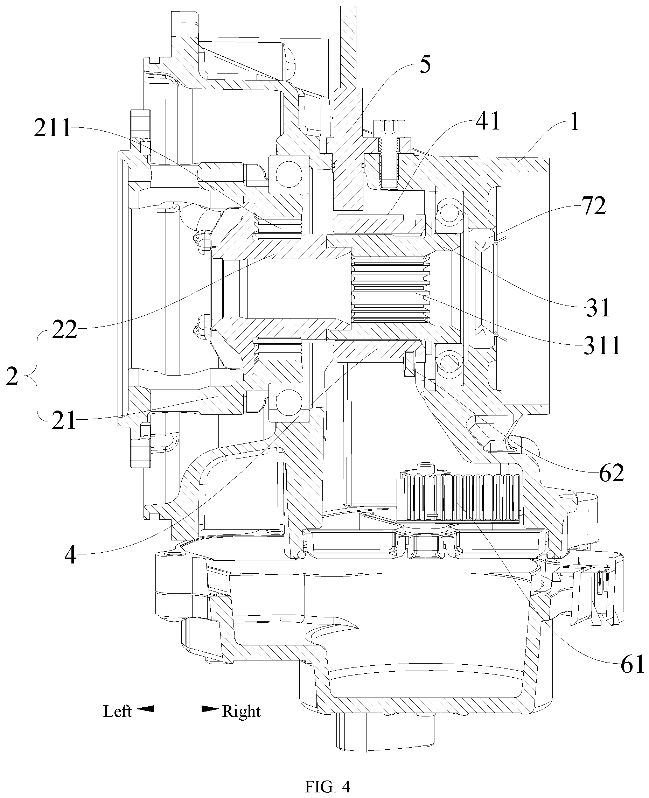

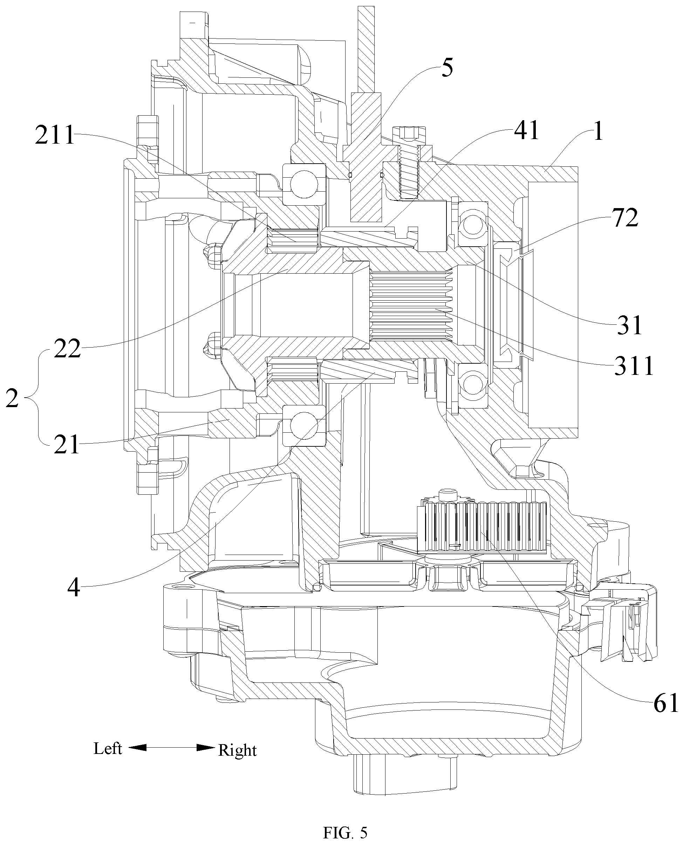

In some embodiments, as shown in FIGS. 4 and 5, the differential assembly 2 includes a differential case 21 and a side bevel gear 22. The side bevel gear 22 passes through the differential case 21. The coupling sleeve 4 has a first position and a second position. In the first position, the coupling sleeve 4 is non-rotatably fitted only with the output sleeve 31. In the second position, the coupling sleeve 4 is non-rotatably fitted with the output sleeve 31 and the side bevel gear 22. It may be understood that in a case that the coupling sleeve 4 is in the first position, the axle is in a two-wheel drive mode, i.e., the transmission assembly 3 idles and does not drive the differential assembly 2 to rotate. In a case that the coupling sleeve 4 is in the second position, the axle is in a four-wheel drive mode, i.e., the transmission assembly 3 may drive the side bevel gear 22 to rotate synchronously, and a differential motion may occur between the differential case 21 and the side bevel gear 22.

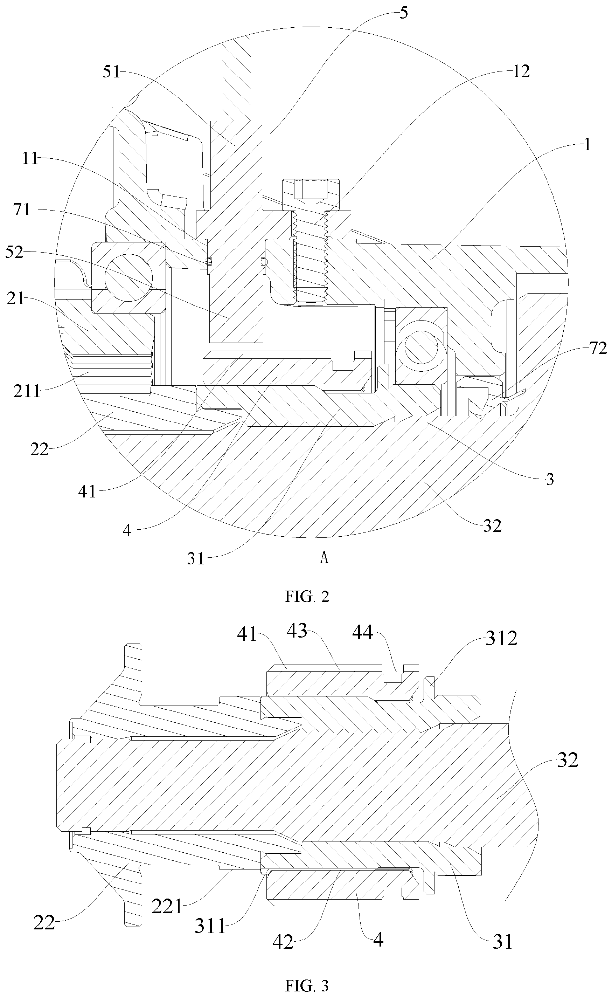

Optionally, as shown in FIG. 3, an outer periphery of the output sleeve 31 is provided with a first external spline 311, an outer periphery of the side bevel gear 22 is provided with a second external spline 221, and an inner wall of the coupling sleeve 4 is provided with a first internal spline 42. The first internal spline 42 may be non-rotatably fitted with the first external spline 311 and the second external spline 221. It may be understood that in a case that the coupling sleeve 4 is in the first position, the first internal spline 42 is non-rotatably fitted with the first external spline 311. In a case that the coupling sleeve 4 is in the second position, the first internal spline 42 is non-rotatably fitted with both the first external spline 311 and the second external spline 221. By adopting the above structural arrangement, the axle according to embodiments of the present invention may ensure a stable transmission among the output sleeve 31, the coupling sleeve 4, and the differential assembly 2, has a simple structure, and facilitates processing and manufacturing.

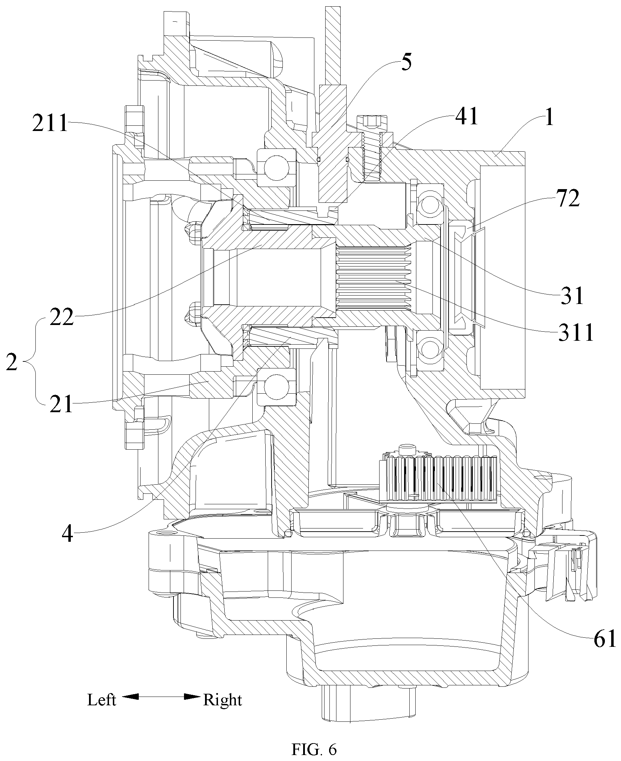

Optionally, as shown in FIG. 6, the coupling sleeve 4 further has a third position. In the third position, the coupling sleeve 4 is non-rotatably fitted with the output sleeve 31, the side bevel gear 22, and the differential case 21. It may be understood that in a case that the coupling sleeve 4 is in the third position, the side bevel gear 22 and the differential case 21 are locked, so that two side bevel gears 22 within the differential case 21 are locked together as an integral unit. The transmission assembly 3 may drive the two side bevel gears 22 (i.e., a left side bevel gears and a right side bevel gears) to rotate at a same speed, so that power output of wheels on both sides of the vehicle is consistent.

For example, as shown in FIGS. 2 to 3, the outer periphery of the coupling sleeve 4 is provided with a third external spline 43, and the third external spline 43 is configured as the signal tooth 41. An inner wall of the differential case 21 is provided with a second internal spline 211. The third external spline 43 may be non-rotatably fitted with the second internal spline 211. By adopting the above structural arrangement, the axle according to embodiments of the present invention may ensure a stable transmission among the output sleeve 31, the coupling sleeve 4, and the differential assembly 2, has a simple structure, and facilitates processing and manufacturing. Additionally, the third external spline 43 configured as the signal tooth 41 facilitates manufacturing of the coupling sleeve 4 and helps reduce production costs of the axle.

In some embodiments, as shown in FIGS. 1 to 3, the transmission assembly 3 further includes a drive shaft 32. The drive shaft 32 of the transmission assembly 3 passes through the output sleeve 31 and the side bevel gear 22. The drive shaft 32 is non-rotatably fitted with the output sleeve 31, and is rotatably fitted with the side bevel gear 22, i.e., the drive shaft 32 is connected with the side bevel gear 22 in a clearance fit, allowing relative rotation between the drive shaft 32 and the side bevel gear 22. It may be understood that an end of the drive shaft 32 passes through the axle housing 1 and is connected to the output sleeve 31 and the side bevel gear 22, while another end of the drive shaft 32 is connected to a ball cage 81, and the ball cage 81 is connected to a constant velocity shaft 82. By passing the drive shaft 32 through the side bevel gear 22, the axle according to embodiments of the present invention may provide a rotational support for the side bevel gear 22, which is beneficial for improving a transmission stability of the axle.

For example, the output sleeve 31 and the side bevel gear 22 may be rotatably connected using a male spigot and female spigot arrangement, which may provide axial and radial positioning for the side bevel gear 22, thus further improving the transmission stability of the axle.

Optionally, as shown in FIG. 1, the axle further includes a driving member 61 and a shift fork 62. The shift fork 62 is connected to the coupling sleeve 4. The driving member 61 is connected to the shift fork 62. The driving member 61 may drive the shift fork 62 to move along an axial direction of the output sleeve 31, so as to drive the coupling sleeve 4 to move among the first position, the second position, and the third position. Specifically, the outer periphery of the coupling sleeve 4 has a groove 44, and the shift fork 62 is mounted in the groove 44 to be relatively fixed to the coupling sleeve 4. For example, the driving member 61 may transmit motion in a form of a rack and pinion, and a specific structure of the driving member 61 is not limited in the present application.

Optionally, as shown in FIG. 3, the outer periphery of the output sleeve 31 is provided with a limiting flange 312 arranged at a side of the coupling sleeve 4 facing away from the differential assembly 2. The coupling sleeve 4 may abut against the limiting flange 312, thereby limiting the movement position of the coupling sleeve 4 and improving the movement accuracy of the coupling sleeve 4.

In some embodiments, as shown in FIG. 2, the axle housing 1 has a mounting hole 11. The vehicle speed sensor 5 includes a sensor body 51 and a speed measuring head 52 connected to the sensor body 51. The speed measuring head 52 passes through the mounting hole 11 and faces the signal tooth 41. The sensor body 51 is arranged outside the axle housing 1 and is connected to the axle housing 1 via a fastener 12. It may be understood that an axial direction of the mounting hole 11 is consistent with a radial direction of the coupling sleeve 4, and an inner end of the mounting hole 11 faces the signal tooth 41. The speed measuring head 52 is arranged within the mounting hole 11, which may reduce interference from the external environment on the signal tooth 41 and the speed measuring head 52, and improve a detection stability of the speed measuring head 52.

For example, as shown in FIG. 2, the fastener 12 is a threaded member, and the threaded member passes through the sensor body 51 and is screwed into the axle housing 1 to fix the vehicle speed sensor 5. By connecting the vehicle speed sensor 5 in the above manner, the axle according to embodiments of the present invention may facilitate assembly and disassembly of the vehicle speed sensor 5 by an operator.

Optionally, as shown in FIG. 2, the axle further includes a first sealing member 71 arranged between the mounting hole 11 and the speed measuring head 52. For example, the first sealing member 71 is an elastic sealing ring sleeved on the speed measuring head 52, so that a probability of sewage or dust entering the axle housing 1 through a gap between the mounting hole 11 and the speed measuring head 52 may be reduced, thus improving a dust-proof and sealing effect of the axle.

Optionally, as shown in FIGS. 2 and 3, the axle further includes a second sealing member 72. The second sealing member 72 is arranged between the axle housing 1 and the drive shaft 32, and is arranged at a side of the output sleeve 31 facing away from the differential assembly 2. For example, the second sealing member 72 is a sealing ring arranged at a pivotal position between the axle housing 1 and the drive shaft 32. By providing the second sealing member 72, the axle according to embodiments of the present invention may, on one hand, prevent sewage or dust from entering the axle housing 1 through a gap between the axle housing 1 and the drive shaft 32, and on the other hand, prevent lubricant inside the axle housing 1 from leaking to the outside through the gap between the axle housing 1 and the drive shaft 32.

An all-terrain vehicle according to another embodiment of the present invention includes the axle according to the present invention.

In the all-terrain vehicle according to the embodiment of the present invention, since the outer periphery of the coupling sleeve 4 is provided with the signal tooth 41, and the vehicle speed sensor 5 passes through the axle housing 1 and faces the signal tooth 41, the signal tooth 41 and the coupling sleeve 4 may be integrated into one part, thereby reducing the number of parts inside the axle, making the structure of the axle more compact, and helping reduce production costs of the axle. Moreover, since the signal tooth 41 is arranged in the axle housing 1, interference from the external environment on the ABS signal output structure may be reduced, the output and reception stability of ABS signals may be improved, and wear or even failure caused by exposure of the ABS signal output structure may be avoided.

In the description of the present invention, it should be understood that the orientation or position relationship indicated by terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present invention and simplifying the description, and does not indicate or imply that the referred device or element must have a specific orientation, and be constructed and operated in a specific orientation, so it cannot be understood as a limitation of the present invention.

In addition, terms "first" and "second" are only used for purpose of description, and cannot be understood as indicating or implying relative importance or implicitly indicating the number of indicated technical features. Therefore, the feature defined as the "first" or the "second" may explicitly or implicitly include at least one such feature. In the description of the present invention, "a plurality of" means at least two, such as two, three, etc., unless otherwise specifically defined.

In the present invention, unless otherwise expressly defined, terms such as "install/mount", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present invention may be understood according to the specific situations.

In the present invention, unless otherwise expressly defined, a first feature "below", "under", "on bottom of", "above", "on", or "on top of" a second feature may include an embodiment in which the first feature is in direct contact with the second feature, or the first feature is in indirect contact with the second feature through an intermediate media. And, a first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present invention, terms such as "an embodiment", "some embodiments", "an example", "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in one or more embodiments or examples in any suitable manner. In addition, without contradiction, those skilled in the art may combine and unite different embodiments or examples or features of the different embodiments or examples described in this specification.

Although the above embodiments have been shown and described, it may be understood that the above embodiments are illustrative and shall not be understood as limitation to the present invention, and changes, modifications, alternatives and variations made to the above embodiments by those skilled in the art all fall within the protection scope of the present invention.

## Claims

1. An axle, comprising:
an axle housing;
a differential assembly arranged within the axle housing;
a transmission assembly comprising an output sleeve, wherein the output sleeve is arranged within the axle housing and fitted with the differential assembly;
a coupling sleeve non-rotatably sleeved on the output sleeve, wherein the coupling sleeve is axially movable relative to the output sleeve to engage with and disengage from the differential assembly, and an outer periphery of the coupling sleeve is provided with a signal tooth; and
a vehicle speed sensor passing through the axle housing and facing the signal tooth.

2. The axle according to claim 1, wherein the differential assembly comprises a differential case and a side bevel gear passing through the differential case, and the coupling sleeve has a first position, a second position, and a third position,
wherein in the first position, the coupling sleeve is non-rotatably fitted only with the output sleeve; in the second position, the coupling sleeve is non-rotatably fitted with the output sleeve and the side bevel gear; and in the third position, the coupling sleeve is non-rotatably fitted with the output sleeve, the side bevel gear and the differential case.

3. The axle according to claim 2, wherein an outer periphery of the output sleeve is provided with a first external spline, an outer periphery of the side bevel gear is provided with a second external spline, an inner wall of the coupling sleeve is provided with a first internal spline, and the first internal spline is configured to be non-rotatably fitted with the first external spline and the second external spline.

4. The axle according to claim 3, wherein an outer periphery of the coupling sleeve is provided with a third external spline, the third external spline is configured as the signal tooth, an inner wall of the differential case is provided with a second internal spline, and the third external spline is configured to be non-rotatably fitted with the second internal spline.

5. The axle according to claim 3, wherein the transmission assembly further comprises a drive shaft, the drive shaft passes through the output sleeve and the side bevel gear, the drive shaft is non-rotatably fitted with the output sleeve, and the drive shaft is rotatably fitted with the side bevel gear; and/or
the axle further comprises a driving member and a shift fork, the shift fork is connected to the coupling sleeve, the driving member is connected to the shift fork, and the driving member is configured to drive the shift fork to move along an axial direction of the output sleeve, so as to drive the coupling sleeve to move among the first position, the second position, and the third position.

6. The axle according to any one of claims 1 to 5, wherein the axle housing has a mounting hole, the vehicle speed sensor comprises a sensor body and a speed measuring head connected to the sensor body, the speed measuring head passes through the mounting hole and faces the signal tooth, and the sensor body is arranged outside the axle housing and connected to the axle housing via a fastener.

7. The axle according to claim 6, wherein the axle further comprises a first sealing member arranged between the mounting hole and the speed measuring head.

8. The axle according to claim 6, wherein the axle further comprises a second sealing member and a drive shaft, the drive shaft passes through the output sleeve, the second sealing member is arranged between the axle housing and the drive shaft, and the second sealing member is arranged at a side of the output sleeve facing away from the differential assembly.

9. An all-terrain vehicle, comprising the axle according to any one of claims 1 to 8.
